# EUROPÄISCHE PATENTSCHRIFT

(11) **EP 2 882 802 B1**
(45) Veröffentlichungstag und Bekanntmachung des Hinweises auf die Patenterteilung: **28.06.2017**
(21) Anmeldenummer: 13745624.0
(22) Anmeldetag: 30.07.2013
(51) Int. Cl.: C08K 3/00, C08L 83/04, C09J 183/04

(54) **WITTERUNGSSTABILE SILICONMISCHUNG MIT VERBESSERTER GRÜNSTANDFESTIGKEIT**
WEATHER-RESISTANT SILICON MIXTURE WITH IMPROVED SHAPE RETENTION
MÉLANGE DE SILICONE STABLE AUX INTEMPÉRIES AVEC UN CORPS À VERT AMÉLIORÉ

(30) Priorität: 10.08.2012 EP 12180082
(43) Veröffentlichungstag der Anmeldung: 17.06.2015
(73) Patentinhaber: Sika Technology AG, 6340 Baar (CH)
(72) Erfinder: VON MALOTKI, Christian, 4822 Bad Goisern am Hallstätter See (AU); FRIEDEL, Manuel, CH-8048 Zürich (CH)
(74) Vertreter: Sika Patent Attorneys
(86) Internationale Anmeldenummer: PCT/EP2013/065974
(87) Internationale Veröffentlichungsnummer: WO 2014/023609

(56) Entgegenhaltungen:
- US-B1- 6 235 832

## Beschreibung

### Technisches Gebiet

Die Erfindung betrifft eine ein- oder zweikomponentige Siliconformulierung, deren Verwendung und ein Verfahren zur Herstellung einer Anordnung, bei dem ein Raum zwischen zwei Substraten mit der ein- oder zweikomponentigen Siliconformulierung verfüllt wird.

### Stand der Technik

Es ist bekannt, dass 2K RTV-Silicone mit guter Witterungsstabilität formuliert werden können. Internationale Fassadennormen wie die EOTA-ETAG 002 verlangen bestimmte Stabilitäten nach künstlicher, beschleunigter Bewitterung. Siliconformulierungen mit exzellenten rheologischen Eigenschaften, d. h. insbesondere Formulierungen mit einer hohen Frühfestigkeit bzw. Standfestigkeit im nicht ausgehärteten Zustand, die dann zu verringertem "Slip Down" führen, erfüllen diese Anforderungen an Witterungsstabilität häufig nicht.

Es ist auch bekannt, dass Siliconformulierungen mit hoher Frühfestigkeit erhalten werden können, indem die Reaktivität angepasst und eine sehr schnelle Durchhärtung gefördert wird und/oder die Viskosität der Mischung stark erhöht wird. Nachteil ist in beiden Fällen die mangelnde bzw. erschwerte Verarbeitbarkeit.

Die US-A-4563498 beschreibt 1K Formulierungen, die ein bestimmtes Verhältnis an Verstärkungsfüllstoff und Extenderfüllstoff enthalten und zu Elastomeren mit niederem Modul aushärten. Aus der GB-A-2306491 sind Siliconformulierungen bekannt, die Silica als Füllstoff enthalten und sprühbar bleiben und gleichzeitig verbesserte mechanische Eigenschaften besitzen. Die WO-A-2012/041952 beschreibt 2K Siliconformulierungen, die nach Vermischen der Komponenten zu erhöhter Viskosität führen, wobei die Formulierung pyrogenes hydrophobes Silica als Füllstoff enthalten kann.

Die US-A-6235832 und die US-A-5840794 sind auf 1K Siliconformulierungen gerichtet, die eine verbesserte Grünstandfestigkeit erzielen. Die DE-A-102004005221 beschreibt Silicon-Kieselsäure-Mischungen mit niedriger Fliessgrenze, bei denen pyrogene Kieselsäure als Füllstoff eingesetzt wird.

Es ist keine Siliconformulierung bekannt, die exzellente Frühfestigkeit, gemessen als verringerten "slip down", bei guter Verarbeitbarkeit, gemessen als niedrige Nachgebegrenze, mit exzellenter Witterungsbeständigkeit vereint.

### Darstellung der Erfindung

Aufgabe der vorliegenden Erfindung ist es, eine Siliconformulierung und insbesondere eine feuchtigkeitshärtende Siliconformulierung, zur Verfügung zu stellen, die bei niedriger Nachgebegrenze eine hohe Grünstandfestigkeit erreicht und welche besonders witterungsstabile mechanische Eigenschaften besitzt.

Überraschenderweise wurde gefunden, dass diese Eigenschaften mit einer Siliconformulierung, erreicht werden können, wenn Füllstoffe mit einer mittleren Teilchengröße von kleiner gleich 0,1 µm und Füllstoffe mit einer mittleren Teilchengröße von größer als 0,1 µm bis kleiner oder 10 µm in Kombination in der Formulierung eingesetzt werden.

Die vorliegende Erfindung betrifft demgemäß eine ein- oder zweikomponentige Siliconformulierung, umfassend
a) mindestens ein Poly(diorganosiloxan) wie in Anspruch 1 definiert,
b) mindestens einen ersten Füllstoff mit einer mittleren Teilchengröße D50 kleiner gleich 0,1 µm,
c) mindestens einen zweiten Füllstoff mit einer mittleren Teilchengröße D50 im Bereich von größer als 0,1 µm bis 10 µm, und
d) mindestens einen Vernetzer für das Poly(diorganosiloxan), sowie
e) gegebenenfalls mindestens einen Kondensationskatalysator und/oder
f) gegebenenfalls mindestens einen Zusatzstoff ausgewählt aus der Gruppe bestehend aus Weichmachern, Rheologiehilfsmitteln, Verdickungsmitteln, Haftvermittlern, Katalysatoren, Beschleunigern, Trocknungsmitteln, Duftstoffen, Pigmenten, Bioziden, Stabilisatoren und Tensiden,
wobei die Bestandteile bei der einkomponentigen Siliconformulierung in einer Komponente und bei der zweikomponentigen Siliconformulierung aufgeteilt in zwei Komponenten A und B enthalten sind, und wobei das Gewichtverhältnis von erstem Füllstoff zu zweitem Füllstoff im Bereich von 10:1 bis 2:1 liegt.

Mit "Poly" beginnende Substanznamen bezeichnen hier Substanzen, die formal zwei oder mehr der in ihrem Namen vorkommenden funktionellen Gruppen pro Molekül enthalten. Ein Polyol ist z.B. eine Verbindung mit zwei oder mehr Hydroxygruppen. Der Begriff "Polymer" umfasst hier einerseits ein Kollektiv von chemisch einheitlichen, sich aber in Bezug auf Polymerisationsgrad, Molmasse und Kettenlänge gegebenenfalls unterscheidenden Makromolekülen, das durch eine Polyreaktion (z.B. Polymerisation, Polyaddition, Polykondensation) von einem oder mehreren Monomeren erhältlich ist. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heißt reaktive oligomere Voraddukte, deren funktionelle Gruppen am Aufbau von Makromolekülen beteiligt sind.

Unter "Heteropolyether" versteht man hier Polymere mit einer Polyether-analogen Struktur, die teilweise oder vollständig Heteroatome, wie z.B. S, anstelle der Ether-Sauerstoffatome enthalten.

Unter "Molekulargewicht" versteht man hier das Zahlenmittel des Molekulargewichts (Mₙ).

Unter "Raumtemperatur" wird eine Temperatur von 23°C verstanden.

Gewichtsangaben beziehen sich, wenn nicht anders angegeben, auf die gesamte Formulierung, d.h. bei einer zweikomponentigen Formulierung auf das gemeinsame Gewicht der Komponenten A und B.

Bei der erfindungsgemäßen Siliconformulierung handelt es sich um ein- oder zweikomponentige Siliconformulierung, die z.B. als Kleb- oder Dichtstoff geeignet ist. Der Fachmann ist mit solchen ein- oder zweikomponentigen Formulierungen bestens vertraut.

Bei der einkomponentigen Formulierung liegt nur eine Komponente vor, d.h. alle Bestandteile der Formulierung sind in dieser Komponente enthalten und liegen dort als Mischung vor.

Eine zweikomponentige Siliconformulierung besteht aus einem Kit mit zwei gesonderten Komponenten A und B. Die verschiedenen Bestandteile der Formulierung sind auf diese beiden Komponenten aufgeteilt, d.h. die Bestandteile sind in der Komponente A und/oder in der Komponente B enthalten. Ein Bestandteil ist dabei in der Regel nur in einer der beiden Komponenten enthalten. Es ist aber gegebenenfalls auch möglich, dass ein oder mehrere Bestandteile in beiden Komponenten A und B enthalten sind. Die beiden Komponenten A und B der zweikomponentigen Formulierung werden vor der Anwendung in einem geeigneten Verhältnis miteinander vermischt.

Die erfindungsgemäßen ein- oder zweikomponentigen Siliconformulierungen sind bevorzugt fließfähige Siliconformulierungen, wobei sich dies bei zweikomponentigen Formulierungen auch auf die Mischung bezieht, die nach der Vereinigung der beiden Komponenten erhalten wird. Dies bezieht sich naturgemäß auf den Zustand bei der Anwendung, d.h. bei Aufbringen auf ein Substrat oder beim Verfüllen eines Zwischenraums. Bei der nachfolgenden Aushärtung erfolgt dann eine Verfestigung des Systems. Die erfindungsgemäßen ein- oder zweikomponentigen Siliconformulierungen, bevorzugt die fließfähigen Siliconformulierungen, sind ferner bevorzugt feuchtigkeitshärtende Siliconformulierungen. Bei den Siliconformulierungen kann es sich um Siliconkautschuke bzw. Siliconelastomere handeln.

Bei der ein- oder zweikomponentigen Siliconformulierung handelt es sich insbesondere um eine kalthärtende Siliconformulierung, die gewöhnlich als RTV-Siliconförmulierung bezeichnet wird (RTV = "room temperature vulcanizing"; bei Raumtemperatur vulkanisierend). Es kann sich dabei um eine einkomponentige Siliconformulierung handeln, die auch als RTV-1 Silicon bzw. RTV-1 Siliconkautschuk bezeichnet wird. Dies sind allgemein feuchtigkeitshärtende Formulierungen. Alternativ handelt es sich um eine zweikomponentige Siliconformulierung (RTV-2 Silicon bzw. RTV-2 Siliconkautschuk). RVT-1 und RTV-2 Siliconkautschuke finden in großem Umfang als Kleb- oder Dichtstoffe Verwendung.

Bevorzugt ist eine zweikomponentige Siliconformulierung.

Im Folgenden werden die Bestandteile der ein- oder zweikomponentigen Siliconformulierung erläutert.

Die Siliconformulierung umfasst ein oder mehrere vernetzbare Poly(diorganosiloxane) (Bestandteil a). Die Vernetzung kann über reaktive Endgruppen oder durch in reaktive Gruppen überführbare Endgruppen der Poly(diorganosiloxane) erfolgen. Es können alle üblichen Poly(diorganosiloxane) eingesetzt werden. Solche Poly(diorganosiloxane) sind z.B. zur Herstellung von Kleb- oder Dichtstoffen, wie RTV-Siliconkautschuk, gut bekannt und im Handel erhältlich.

Bei dem Poly(diorganosiloxan) kann es sich bevorzugt um ein Poly(diorganosiloxan) mit Hydroxyl-Endgruppen und/oder um ein Poly(diorganosiloxan) mit Alkoxysilyl-Endgruppen handeln. Hydroxylgruppen terminierte Poly(diorganosiloxane) sind bekannt und kommerziell erhältlich. Auch die Herstellung derartiger Poly(diorganosiloxane) erfolgt in bekannter Art. Beispielsweise ist sie in US 4,962,152 beschrieben.

Das Poly(diorganosiloxan) ist bevorzugt eine Poly(dialkylsiloxan), wobei die Alkylreste bevorzugt 1 bis 5, bevorzugter 1 bis 3 C-Atome aufweisen, und besonders bevorzugt Methylgruppen sind.

Die Viskosität der eingesetzten Poly(diorganosiloxane) kann in breiten Bereichen variieren. Das oder die eingesetzten Poly(diorganosiloxane) weisen bei einer Temperatur von 23 °C eine Viskosität von 10 bis 500'000 mPa·s, bevorzugt von 5'000 bis 350'000 mPa·s, besonders bevorzugt von 6'000 bis 120'000 mPa·s und am meisten bevorzugt von 10'000 bis 80'000 mPa·s auf. Die Viskosität wird gemäß der im experimentellen Teil beschriebenen Methode bestimmt.

Es werden ein oder mehrere Polydiorganosiloxane der Formel (I) verwendet 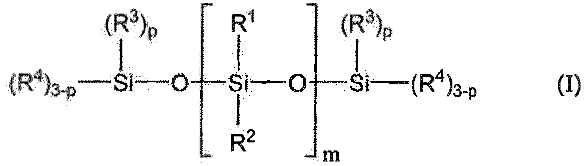 wobei
die Reste R¹, R² und R³ unabhängig voneinander für lineare oder verzweigte, einwertige Kohlenwasserstoffreste mit 1 bis 12 C-Atomen stehen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile bzw. Reste aufweisen; die Reste R⁴ unabhängig voneinander für Wasserstoff, Hydroxylgruppen oder für Alkoxy-, Acetoxy- oder Ketoximgruppen mit jeweils 1 bis 13 C-Atomen stehen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile bzw. Reste aufweisen, wobei die Reste R⁴ bevorzugt für Hydroxylgruppen oder für Alkoxygruppen stehen; der Index p für einen Wert von 0, 1 oder 2 steht; und der Index m so gewählt ist, dass das Poly(diorganosiloxan) bei einer Temperatur von 23 °C eine Viskosität von 10 bis 500000 mPa·s aufweist.

Beim Poly(diorganosiloxan) der Formel (I) stehen die Reste R¹ und R² vorzugsweise für Alkylreste mit 1 bis 5, insbesondere mit 1 bis 3 C-Atomen, bevorzugt für Methylgruppen.

Handelt es sich beim Poly(diorganosiloxan) der Formel (I) um ein Hydroxylgruppen terminiertes Poly(diorganosiloxan) (R⁴ = Hydroxylgruppe), steht der Index p insbesondere für einen Wert von 2.

Handelt es sich beim Poly(diorganosiloxan) der Formel (I) um ein Poly(diorganosiloxan) mit Alkoxy-, Acetoxy- oder Ketoxim-Endgruppen (R⁴ = Alkoxy-, Acetoxy- oder Ketoximgruppe), steht der Index p bevorzugt für einen Wert von 0 oder 1. Bei diesen Poly(diorganosiloxanen) steht R⁴ vorzugsweise für Ketoximgruppen oder besonders bevorzugt für Alkoxygruppen. Wenn es sich um eine zweikomponentige Siliconformulierung handelt, in der in der Komponente A ein Poly(diorganosiloxan) mit Alkoxy-, Acetoxy- oder Ketoxim-Endgruppen enthält, dann enthält die Komponente A bevorzugt zusätzlich Wasser.

Bevorzugte Alkoxygruppen sind Methoxy-, Ethoxy- oder Isopropoxygruppen. Bevorzugte Ketoximgruppen sind Dialkylketoximgruppen, deren Alkylgruppen jeweils 1 bis 6 C-Atome aufweisen. Vorzugsweise stehen die beiden Alkylgruppen der Dialkylketoximgruppen unabhängig voneinander für Methyl-, Ethyl-, n-Propyl-, isoPropyl-, n-Butyl- oder iso-Butylgruppen. Besonders bevorzugt sind diejenigen Fälle, in denen eine Alkylgruppe des Dialkylketoxims für eine Methylgruppe steht und die andere Alkylgruppe des Dialkylketoxims für eine Methyl-, Ethyl- oder für eine iso-Butylgruppe steht. Am meisten bevorzugt steht die Ketoximgruppe für eine Ethylmethylketoximgruppe.

Die ein- oder zweikomponentige Siliconformulierung enthält ferner mindestens einen ersten Füllstoff mit einer mittleren Teilchengröße kleiner gleich 0,1 µm (Bestandteil b) und mindestens einen zweiten Füllstoff mit einer mittleren Teilchengröße im Bereich von größer als 0,1 µm bis 10 µm (Bestandteil c).

Sowohl für den ersten als auch für den zweiten Füllstoff können ein oder mehrere Füllstoffe verwendet werden, die sich unabhängig voneinander im Material und/oder der mittleren Teilchengröße unterscheiden können. Der erste und zweite Füllstoff sind auch bei der zweikomponentigen Siliconformulierung bevorzugt vollständig in einer der beiden Komponenten enthalten. Prinzipiell können die beiden Füllstoffe aber auch jeweils in verschiedenen Komponenten enthalten sein oder ein Teil von dem ersten und/oder dem zweiten Füllstoff befinden sich in der jeweils anderen Komponente, dies ist aber nicht bevorzugt.

Vorzugsweise enthält die ein- oder zweikomponentige Siliconformulierung mindestens einen ersten Füllstoff mit einer mittleren Teilchengröße D50 der Primärpartikel von 5 bis 100 nm, bevorzugt von 10 bis 100 nm, bevorzugter 10 bis 80 nm, insbesondere von 15 nm bis 90 nm und ganz besonders bevorzugt von 15 nm bis 50 nm und mindestens einen zweiten Füllstoff mit einer mittleren Teilchengröße D50 der Primärpartikel von größer als 0,1 µm bis 10 µm, z.B. 0,3 µm bis 10 µm, bevorzugt 0,5 µm bis 10 µm, bevorzugter 1 µm bis 10 µm, insbesondere 1 µm bis 8 µm und ganz besonders bevorzugt von 2 µm bis 6 µm. Bei der mittleren Teilchengröße handelt es sich um den D50 Wert der Primärpartikel. Der D50 Wert ist der Wert der Partikelgrößenverteilung, bei dem genau 50% der vorhandenen Partikel größer und 50% der vorhandenen Partikel kleiner sind, wobei sich der D50 Wert auf das Zahlenmittel bezieht. Die Partikelgrößenverteilungen können hier mittels Laserdiffraktion nach ISO 13320 für Partikel größer gleich 0,1µm bzw. mittels dynamischer Lichtstreuung nach ISO 22412 für Partikel kleiner 0,1µm ermittelt werden. Ein anderes Messverfahren für Partikel kleiner 0,1µm ist die Photonenkorrelationsspektroskopie gemäß ISO 13321.

In der ein- oder zweikomponentigen Siliconformulierung liegt das Gewichtsverhältnis an Füllstoffen mit einer mittleren Teilchengröße D50 von kleiner oder gleich 0,1 µm bzw. für den ersten Füllstoff zu Füllstoffen mit einer mittleren Teilchengröße D50 von größer als 0,1 µm bis kleiner oder gleich 10 µm bzw. für den zweiten Füllstoff im Bereich von 10:1 bis 2:1, bevorzugt im Bereich von 9:1 bis 3:1 und besonders bevorzugt im Bereich von 8:1 bis 4:1, wobei Bereiche von 6,5:1 bis 2:1 ebenfalls bevorzugt sind. Auf diese Weise können eine verbesserte Grünstandfestigkeit und eine erhöhte Witterungsbeständigkeit der gehärteten Formulierung erreicht werden.

Für den ersten Füllstoff werden ein oder mehrere, vorzugsweise mehrere Füllstoffe, insbesondere zwei, drei oder mehr Füllstoffe, verwendet, die eine mittlere Teilchengröße D50 der Primärpartikel kleiner gleich 0,1 µm, bevorzugt eine mittlere Teilchengröße D50 der Primärpartikel von 5 nm bis 100 nm und bevorzugter von 10 nm bis 80 nm aufweisen. Für den zweiten Füllstoff werden ein oder mehrere Füllstoffe, bevorzugt ein, zwei oder mehr Füllstoffe, verwendet, die eine mittlere Teilchengröße D50 der Primärpartikel von größer als 0,1 µm bis 10 µm, z.B. 0,3 µm bis 10 µm, bevorzugt 0,5 µm bis 10 µm, bevorzugter 1 µm bis 10 µm, insbesondere 1 µm bis 8 µm aufweisen. Das Gewichtsverhältnis von erstem Füllstoff zu zweitem Füllstoff liegt dabei bevorzugt im Bereich von 10:1 bis 1:2, noch mehr bevorzugt 10:1 bis 1:1, noch mehr bevorzugt 10:1 bis 2:1, bevorzugter im Bereich von 9:1 bis 3:1 und besonders bevorzugt im Bereich von 8:1 bis 4:1, wobei Bereiche von 6,5:1 bis 1:1 und 6,5:1 bis 2:1 ebenfalls bevorzugt sind.

Als Materialien für die Füllstoffe eignen sich alle in der Technik üblicherweise eingesetzten Füllstoffe, sowohl für den ersten Füllstoff als auch für den zweiten Füllstoff. Der erste und zweite Füllstoff können aus dem gleichen Material sein, sind aber gewöhnlich aus unterschiedlichen Materialien.

Beispiele für geeignete Füllstoffe sind anorganische und organische Füllstoffe, zum Beispiel Carbonate, pyrogene und/oder gefällte Metall- und/oder Halbmetalloxide oder -hydroxide oder Mischoxide davon, Sulfate, Carbide, Nitride, Silicate, Glas, Kohlenstoffmodifikationen, natürliche Minerale, Kieselsäuren, Kieselerden oder Russsorten. Konkrete Beispiele sind natürliche, gemahlene oder gefällte Calciumcarbonate, z.B. Kreiden, welche gegebenenfalls mit Fettsäuren, insbesondere Stearinsäure, beschichtet sind, calcinierte Kaoline, Aluminiumoxide, Aluminiumhydroxide, Kieselerde, Kieselsäuren, insbesondere hochdisperse Kieselsäuren aus Pyrolyseprozessen, Russ, insbesondere industriell hergestellter Russ ("carbon black"), Silicate, wie Aluminiumsilicate, Magnesium-Aluminiumsilicate, Zirkoniumsilicate, Quarzmehl, Cristobalitmehl, Diatomeenerde, Glimmer, Eisenoxide, Titanoxide, Zirconiumoxide, Gips, Annalin, Bariumsulfat, Borcarbid, Bornitrid, Graphit, Kohlefasern, Glas oder Glashohlkugeln.

Als Kieselsäure eignen sich auch hydrophobe Kieselsäuren, insbesondere eine hydrophobe, pyrogene Kieselsäure. Typischerweise weisen geeignete hydrophobe Kieselsäuren eine BET-Oberfläche im Bereich von 100 bis 300 m²/g auf. Die BET-Oberfläche wird beispielsweise bestimmt nach EN ISO 18757. Geeignete hydrophobe Kieselsäuren lassen sich beispielsweise durch Hydrophobierung von hydrophilen Kieselsäuren mit Organosilanen oder Organosiloxanen, z.B. Octamethylcyclotetrasiloxan, Polydimethylsiloxan, Dimethyldichlorsilan oder Hexamethyldisilazan, herstellen. Geeignete hydrophobe Kieselsäuren sind beispielsweise kommerziell erhältlich von Evonik Degussa GmbH, Deutschland, von Cabot Corporation, USA oder von Wacker Chemie AG, Deutschland.

Bevorzugt eingesetzte Füllstoffe sind Calciumcarbonate, insbesondere natürliche oder gefällte Kreiden, calcinierte Kaoline, Russ, Kieselerde, Kieselsäuren, insbesondere hochdisperse Kieselsäuren, Siliciumdioxid, Titandioxide, Aluminiumoxide, Eisenoxide, flammhemmende Füllstoffe wie Hydroxide oder Hydrate, insbesondere Hydroxide oder Hydrate von Aluminium, bevorzugt Aluminiumhydroxid.

Eine geeignete Menge Füllstoff, einschließlich erstem und zweitem Füllstoff, liegt z.B. im Bereich von 10 bis 70 Gew.-%, insbesondere 15 bis 60 Gew.-%, bevorzugt 30 bis 60 Gew.-% und insbesondere 41 bis 60 Gew.-%, bezogen auf die gesamte ein- oder zweikomponentige Siliconformulierung.

Die Formulierung umfasst ferner einen oder mehrere Vernetzer für Poly(diorganosiloxane) (Bestandteil d), bei denen es sich um alle hierfür in der Technik bekannten Vernetzer handeln kann.

Der Vernetzer ist z.B. bevorzugt ausgewählt aus einem Tetraalkoxysilan, Organotrialkoxysilan, Diorganodialkoxysilan und/oder Oligo(organoalkoxysilan), Tetrakisketoximosilan, Organotrisketoximosilan, Diorganobisketoximosilan und/oder Oligo(organoketoximosilan), die gegebenenfalls funktionalisiert sind mit einem oder mehreren Heteroatomen im Organyl-Rest, oder Mischungen davon.

Der Vernetzer für Polydiorganosiloxane ist bevorzugt ein Silan der Formel (II).

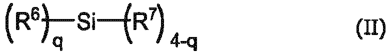

Der Rest R⁶ steht unabhängig voneinander für einen Rest, wie er vorhergehend für R³ im Poly(diorganosiloxan) der Formel (I) definiert worden ist. Selbstverständlich ist R⁶ dabei unabhängig von der Bedeutung von R³ im Poly(diorganosiloxan). Der Rest R⁷ steht unabhängig voneinander für einen Rest, wie er vorhergehend als R⁴ im Poly(diorganosiloxan) der Formel (I) definiert worden ist. Selbstverständlich ist R⁷ dabei unabhängig von der Bedeutung von R⁴ im Poly(diorganosiloxan). Vorzugsweise stehen die Reste R⁷ für Alkoxy- oder Ketoximgruppen, wie sie vorhergehend beschrieben worden sind.

Weiterhin steht der Index q für einen Wert von 0 bis 4, mit der Maßgabe, dass falls q für einen Wert von 3 oder 4 steht, mindestens q-2 Reste R⁶ jeweils mindestens eine mit den Hydroxyl-, Alkoxy-, Acetoxy- oder Ketoximgruppen des Poly(diorganosiloxans) reaktive Gruppe aufweisen. Insbesondere steht q für einen Wert von 0, 1 oder 2, bevorzugt für einen Wert von 0 oder 1.

Beispiele geeigneter Silane der Formel (II) sind Methyltrimethoxysilan, Chlormethyltrimethoxysilan, Ethyltrimethoxysilan, Propyltrimethoxysilan, Vinyltrimethoxysilan, Methyltriethoxysilan, Vinyltriethoxysilan, Phenyltriethoxysilan, Methyltripropoxysilan, Phenyltripropoxysilan, Tetramethoxysilan, Tetraethoxysilan, Tetra-n-propoxysilan, Tetra-n-butoxysilan, Methyltris(methyl-ethylketoximo)silan, Phenyltris(methyl-ethylketoximo)silan, Vinyltris(methyl-ethyl-ketoximo)silan, Methyltris(isobutylketoximo)silan oder Tetra(methyl-ethylketoximo)silan. Besonders bevorzugt sind Methyltrimethoxysilan, Vinyltrimethoxysilan, Tetraethoxysilan, Methyltris(methyl-ethylketoximo)silan, Vinyltris(methyl-ethylketoximo)silan und Methyltris(isobutylketoximo)silan. Bevorzugte Ketoximosilane sind vielfach kommerziell erhältlich, zum Beispiel von ABCR GmbH & Co, Deutschland, oder von Nitrochemie AG, Deutschland.

Weiterhin können die Silane der Formel (II) auch bereits teilweise (ein Teil aller R⁷ = OH) oder vollständig hydrolysiert (alle R⁷ = OH) vorliegen. Aufgrund der stark erhöhten Reaktivität von teilweise oder vollständig hydrolysierten Silanen kann ihr Einsatz als Vernetzer vorteilhaft sein. Dem Fachmann ist dabei bekannt, dass es beim Einsatz von teilweise oder vollständig hydrolysierten Silanen zur Bildung von oligomeren Siloxanen, insbesondere zu Dimeren und/oder Trimeren, kommen kann, welche durch Kondensation von hydrolysierten Silanen gebildet werden.

Besonders bevorzugte oligomere Siloxane sind beispielsweise Hexamethoxydisiloxan, Hexaethoxydisiloxan, Hexa-n-propoxydisiloxan, Hexa-n-butoxydisiloxan, Octaethoxytrisiloxan, Octa-n-butoxytrisiloxan und Decaethoxytetrasiloxan.

Selbstverständlich können als Vernetzer für Poly(diorganosiloxane) auch beliebige Mischungen der vorhergehend genannten Silane eingesetzt werden.

Der Anteil des Vernetzers für Poly(diorganosiloxane) beträgt vorzugsweise 0,1 bis 15 Gew.-%, insbesondere 1 bis 10 Gew.-%, bevorzugt 2 bis 6 Gew.-%, bezogen auf die gesamte ein- oder zweikomponentige Siliconzusammensetzung.

Als optionalen Bestandteil kann die Siliconformulierung, insbesondere die zweikomponentige Siliconformulierung, ferner einen oder mehrere Kondensationskatalysator enthalten (Bestandteil e). Dieser dient als Katalysator für die Vernetzung der Polydiorganosiloxanen. Bevorzugte Kondensationskatalysatoren sind Organylverbindungen und/oder Komplexe von Metallen oder Halbmetallen, insbesondere aus den Gruppen Ia, IIa, IIIa, IVa, IVb oder IIb des Periodensystems der Elemente, wie z.B. Sn-Verbindungen, Ti-Verbindungen, wie Titanate, und Borate, oder Mischungen davon.

Bevorzugte zinnorganische Verbindungen sind Dialkylzinnverbindungen, z.B. ausgewählt aus Dimethylzinndi-2-ethylhexanoat, Dimethylzinndilaurat, Di-n-butylzinndiacetat, Di-n-butylzinndi-2-ethylhexanoat, Di-n-butylzinndicaprylat, Di-n-butylzinndi-2,2-dimethyloctanoat, Di-n-butylzinndilaurat, Di-n-butylzinn-distearat, Din-butylzinndimaleinat, Di-n-butylzinndioleat, Di-n-butylzinndiacetat, Di-n-octylzinndi-2-ethylhexanoat, Di-n-octylzinndi-2,2-dimethyloctanoat, Di-n-octylzinndimaleinat und Din-octylzinndilaurat.

Als Titanate bzw. Organotitanate werden Verbindungen bezeichnet, welche mindestens einen über ein Sauerstoffatom an das Titanatom gebundenen Liganden aufweisen. Als über eine Sauerstoff-Titan-Bindung an das Titanatom gebundene Liganden eignen sich dabei diejenigen, welche ausgewählt sind aus der Gruppe bestehend aus Alkoxygruppe, Sulfonatgruppe, Carboxylatgruppe, Dialkylphosphatgruppe, Dialkylpyrophosphatgruppe und Acetylacetonatgruppe. Bevorzugte Titanate sind beispielsweise Tetrabutyl- oder Tetraisopropyltitanat. Weiterhin geeignete Titanate weisen mindestens einen mehrzähnigen Liganden, auch Chelatligand genannt, auf. Insbesondere ist der mehrzähnige Ligand ein zweizähniger Ligand.

Geeignete Titanate sind beispielsweise unter den Handelsnamen Tyzor^{®} AA, GBA, GBO, AA-75, AA-65, AA-105, DC, BEAT, IBAY kommerziell erhältlich von der Firma DorfKetal, Indien.

Selbstverständlich ist es möglich oder in gewissen Fällen sogar bevorzugt, Mischungen verschiedener Katalysatoren einzusetzen. Beispielsweise ist eine Mischung einer zinnorganischen Verbindung mit einem Titanat ein bevorzugter Katalysator.

Der Anteil des Kondensationskatalysators für die Vernetzung von Poly(diorganosiloxanen) kann in breiten Bereichen variieren, beträgt aber vorzugsweise, falls eingesetzt, 0,001 bis 10 Gew.-%, insbesondere 0,005 bis 4 Gew.-%, bevorzugt 0,01 bis 3 Gew.-%, bezogen auf die gesamte ein- oder zweikomponentige Siliconformulierung.

Ferner kann die ein- oder zweikomponentige Siliconformulierung gegebenenfalls einen oder mehrere Zusatzstoffe (Komponente f) ausgewählt aus Weichmachern, Rheologiehilfsmitteln, Verdickungsmitteln, Haftvermittlern, Katalysatoren, Beschleunigern, Trocknungsmitteln, Duftstoffen, Pigmenten, Bioziden, Stabilisatoren und Tensiden aber auch Verarbeitungshilfsmitteln, Farbstoffen, Inhibitoren, Hitzestabilisatoren, Antistatika, Flammschutzmitteln, Wachsen, Verlaufsmitteln, Thixotropiermitteln und weiteren dem Fachmann bekannten gängigen Additiven umfassen. Hierfür können alle in der Technik bekannten und üblichen Zusatzstoffe eingesetzt werden. Beim Einsatz von derartigen optionalen Bestandteilen ist es wichtig darauf zu achten, dass Bestandteile, welche durch Reaktion untereinander oder mit anderen Inhaltsstoffen die Lagerstabilität der Zusammensetzung beeinträchtigen könnten, getrennt voneinander, aufbewahrt werden.

Geeignete Zusatzstoffe, insbesondere Weichmacher und Haftvermittler, welche in der Siliconformulierung enthalten sein können, sind beispielsweise beschrieben in den Absätzen [0051] bis [0055] der Patentanmeldung US-A1-2010/063190.

Als Verdickungsmittel werden z.B. insbesondere wasserlösliche bzw. wasserquellbare Polymere oder anorganische Verdickungsmittel verwendet. Beispiele für organische natürliche Verdickungsmittel sind Agar-agar, Carrageen, Tragant, Gummi arabicum, Alginate, Pektine, Polyosen, Guar-Mehl, Stärke, Dextrine, Gelatine oder Casein. Beispiele für organische voll- oder teilsynthetische Verdickungsmittel sind Carboxymethylcellulose, Celluloseether, Hydroxyethylcellulose, Hydroxypropylcellulose, Poly(meth)acrylsäurederivate, Poly(meth)acrylate, Polyvinylether, Polyvinylalkohol oder Polyamide. Verdickungsmittel werden bei 2K-Formulierungen insbesondere in der Komponente B eingesetzt, wenn die Komponente A ein Poly(diorganosiloxan), bei dem die Reste R⁴ für Alkoxy-, Acetoxy- oder Ketoximgruppen stehen, verwendet wird, insbesondere wenn die Komponente B auch Wasser enthält.

Die ein- oder zweikomponentige Siliconfiormulierung kann gegebenenfalls weitere Inhaltsstoffe und Zusätze wie endgruppenverschlossene Siliconöle, z.B. mit einer Viskosität von 10 bis 1'000 mPa·s (bestimmt nach der im experimentellen Teil beschriebenen Methode), aminofunktionalisierte Oligosiloxane, Polyamine, Polyether, Heteropolyether und/oder Polyetheramine enthalten. Die endgruppenverschlossenen Siliconöle sind nicht zur Vernetzung geeignet und können bei der zweikomponentigen Formulierung in einer oder beiden Komponenten enthalten sein. Sie eignen sich z.B. zur Einstellung der Viskosität. Solche endgruppenverschlossenen Siliconöle entsprechen Verbindungen der allgemeinen Formel (I), wobei R¹, R² und R³ unabhängig voneinander die oben beschriebenen Bedeutungen haben, p einen Wert von 3 hat und m so gewählt ist, dass eine Viskosität von 10 bis 1'000 mPa·s eingestellt ist.

Die Siliconformulierung, insbesondere die zweikomponentige Siliconformulierung, kann z.B. mindestens ein Additiv ausgewählt aus Polyamin, Polyether, Heteropolyether und Polyetheramin umfassen. Als Additiv eignen sich auch Derivate der genannten Verbindungen. Insbesondere weist das Additiv zusätzlich mindestens eine funktionelle Gruppe der Formel -XH auf, wobei X für O, S oder NR⁵ steht und R⁵ für ein Wasserstoffatom oder für einen linearen oder verzweigten, einwertigen Kohlenwasserstoffrest mit 1 bis 20 C-Atomen steht. Weiterhin weisen geeignete Additive bevorzugt ein Molekulargewicht im Bereich von 100 bis 10000 g/mol auf. Vorzugsweise ist das Additiv ein Polyamin oder Polyetheramin. Geeignete Polyamine sind insbesondere Polyalkylenimin, wie Polyethylenimin oder Polypropylenimin, oder alkoxyliertes Polyamin, wie ethoxyliertes und/oder propoxyliertes Ethylendiamin. Geeignete Polyetheramine sind Polyoxyethylenamin, Polyoxypropylenamin oder Polyoxyethylen-polyoxypropylenamin. Als Polyetheramine besonders bevorzugt sind Polyethermonoamine, Polyetherdiamine oder Polyethertriamine. Bei den Aminogruppen kann es sich dabei um primäre, sekundäre oder tertiäre Aminogruppen handeln. Insbesondere handelt es sich bei den Aminogruppen um primäre oder sekundäre Aminogruppen.

Geeignete Polyetheramine sind beispielsweise unter dem Handelsnamen Jeffamine^{®} kommerziell erhältlich von Huntsman Corporation, USA. Besonders geeignet sind Jeffamine^{®} der Serien M, D, ED, DER, T, SD oder ST.

Der Anteil des vorstehend beschriebenen Additivs beträgt, falls eingesetzt, z.B. 0,05 bis 5 Gew.-%, insbesondere 0,1 bis 3 Gew.-%, bevorzugt 0,2 bis 1,5 Gew.-%, bezogen auf die gesamte ein- oder zweikomponentige Siliconformulierung.

Dieses Additiv eignet sich z.B. bei zweikomponentigen Siliconformulierungen, wobei die Füllstoffe und das Additiv je in einer der beiden separaten Komponenten der zweikomponentigen Siliconzusammensetzungen enthalten sind. Beim Zusammenführen der beiden Komponenten kann dies zu einem Viskositätsanstieg von über 100% gegenüber der Ausgangsviskosität der höherviskosen Komponente der zweikomponentigen Siliconzusammensetzung führen.

Es ist bevorzugt, dass die erfindungsgemäße ein- oder zweikomponentige Siliconformulierung das folgende Polydiorganosiloxan A1) nicht enthält:
A1) ein Polydiorganosiloxan enthaltend mindestens eine Kettenendgruppe pro Molekül, die eine Multialkoxysilylgruppe der folgenden Formel umfasst

   -Z_{b}-R⁴(Z-SiR²ₙ(OR³)₃₋ₙ)ₐ

   worin R² unabhängig ausgewählt ist aus der Gruppe bestehend aus einem Wasserstoffatom und einwertigen Kohlenwasserstoffgruppen umfassend 1 bis etwa 18 Kohlenstoffatome, R³ eine unabhängig ausgewählte Alkylgruppe umfassend 1 bis etwa 8 Kohlenstoffatome ist, Z unabhängig ausgewählt ist aus der Gruppe bestehend aus zweiwertigen Kohlenwasserstoffgruppen umfassend etwa 2 bis 18 Kohlenstoffatome und einer Kombination von zweiwertigen Kohlenwasserstoffgruppen und Siloxansegmenten beschrieben durch die Formel 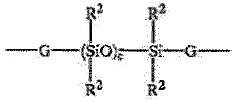 worin R² wie vorstehend definiert ist und G eine unabhängig ausgewählte zweiwertige Kohlenwasserstoffgruppe umfassend etwa 2 bis 18 Kohlenstoffatome ist, c eine ganze Zahl von 1 bis etwa 6 ist, x 0 oder 1 ist und y 0 oder 1 ist, R⁴ unabhängig ausgewählt ist aus der Gruppe bestehend aus einem Siliciumatom und einer Siloxangruppe umfassend mindestens zwei Siliciumatome und jedes Z an ein Siliciumatom von R⁴ gebunden ist, wobei die restlichen Valenzen der Siliciumatome von R⁴ an ein Wasserstoffatom, eine einwertige Kohlenwasserstoffgruppe umfassend 1 bis etwa 18 Kohlenstoffatome gebunden ist oder Siloxanbindungen bilden, n 0, 1 oder 2 ist, a mindestens 2 ist, und b 0 oder 1 ist, mit der Maßgabe, dass, wenn b 0 ist, R⁴ an das Poldiorganosiloxan über eine Siloxanbindung gebunden ist.
   Es ist ferner bevorzugt, dass die erfindungsgemäße ein- oder zweikomponentige Siliconformulierung das folgende Polymer A2) und/oder das folgende Polydimethylsiloxan A3) nicht enthält:
A2) ein Polymer der Formel 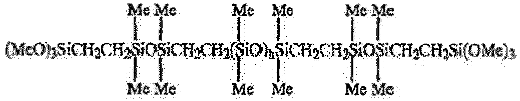 worin h mindestens 2 ist,
A3) ein Polydimethylsiloxan der Formel 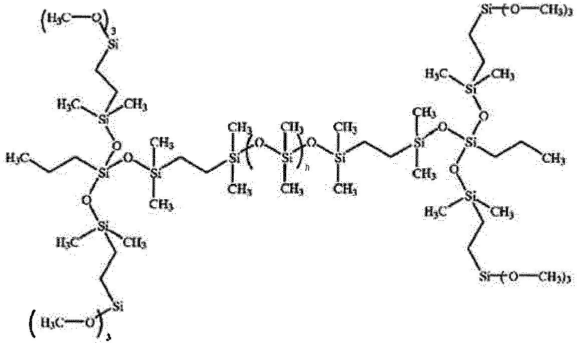 worin h mindestens 2 ist.

Das Polydimethylsiloxan A3) kann gemäß US 6235832 B1 wie folgt hergestellt werden:
203 g (0,686 mol) Tris(dimethylsiloxy)-n-propylsilan hergestellt wie im U.S.-Patent 5,446,185 beschrieben und 5000 ppm einer Lösung eines Platin-Vinylsiloxan-Komplexes enthaltend 30 ppm Platinmetall wurden auf 100° C erwärmt. Die Wärme wurde dann entfernt und 150 g (1,01 mol) Vinyltrimethoxysilan wurden tropfenweise über einen Zeitraum von etwa 45 min zugegeben unter ausreichender Rührung zur Aufrechterhaltung einer Topftemperatur von etwa 100 - 105° C. Die Analyse der Reaktionsmischung durch Gas-Flüssigkeits-Chromatographie (Hewlett Packard 5890 Series II mit einem Flammionisationsdetektor) zeigte eine Ausbeute von etwa 40% einer Multialkoxysilyl-Endverschlussverbindung ("Endcapper A"). Die Reaktionsmischung wurde destilliert, um 141 g Endcapper A mit der folgenden Fomel und siedend bei 155° C bei einem Druck von 0,5 mm Hg zu ergeben:

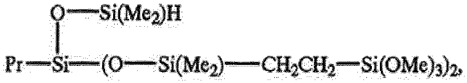

Als nächstes wurden 400 g eines vinyl-endblockierten Polydimethylsiloxans (PDMS) mit einer Viskosität von 65 Pa·s, gemessen bei 25°C mit einem Brookfield-Rheometer und enthaltend 0,012mol Vinyl und 294 ppm einer Lösung eines Platin-Vinylsiloxan-Komplexes enthaltend 1,8 ppm Platinmetall für mehrere Minuten bei 50° C gemischt. Die Wärme wurde entfernt und 7,72 g (enthaltend 0,012 mol Wasserstoff) Endcapper A hergestellt wie vorstehend beschrieben wurden dann zugegeben und das Mischen wurde 1 Stunde fortgesetzt. Die Mischung wurde bei etwa 50 mm Hg Vakuum entlüftet und zur Reaktion über Nacht stehengelassen. Das Vinyl am PDMS reagierte mit dem SiH im Endcapper und es wurde kein restliches Vinyl gefunden bei der Prüfung mit FT-IR (Perkin Elmer 1600 Series). Polydimethylsiloxane endblockiert with Endcapper A und mit einer Gesamtviskosität von etwa 65 Pa·s, gemessen bei 25°C mit einem Brookfield-Rheometer, mit der vorstehend angegebenen Formel für Polydimethylsiloxan A3) wurden gebildet.

Polydiorganosiloxane gemäß A1), A2) und A3) sind in der US 6235832 B1 beschrieben.

Es ist ferner zweckmäßig, dass die erfindungsgemäße ein- oder zweikomponentige Siliconformulierung die folgende Verbindung B1) und/oder die folgende Reaktionsmischung B2) nicht enthält:
B1) ein Di(ethylacetoacetat)diisopropoxytitanat-Chelat
B2) eine Reaktionsmischung aus einer 2:1 molaren Mischung von Glycidoxypropyltrimethoxysilan und Aminopropyltrimethoxysilan.

Es ist ferner bevorzugt, dass von den erfindungsgemäßen ein- oder zweikomponentigen Siliconformulierungen solche Formulierungen ausgenommen sind, die ein Polydiorganosiloxan ausgewählt aus einem Polymer A2) und einem Polydimethylosiloxan A3) wie vorstehend beschrieben, eine Verbindung B1) wie vorstehend beschrieben, eine Reaktionsmischung B2) wie vorstehend beschrieben und Methyltrimethoxysilan enthalten.

Es ist ferner bevorzugt, dass von den erfindungsgemäßen ein- oder zweikomponentigen Siliconformulierungen folgende Formulierungen, Angaben in Gew.-% unter Bezugnahme auf die vorstehend beschriebenen Substanzen, ausgenommen sind:

| | | |
|---|---|---|
| Polydimethylsiloxane umfassend Polymere A2) mit einer Gesamtviskosität von etwa 65 Pa.s, gemessen bei 25°C mit einem Brookfield-Rheometer | 56% | |
| Polydimethylsiloxane A3) endblockiert mit Endcapper A mit einer Gesamtviskosltät von etwa 65 Pa.s, gemessen bei 25°C mit einem Brookfield-Rheometer, hergestellt wie vorstehend beschrieben | | 56% |
| gefälltes Calciumcarbonat behandelt mit Stearat und mit einer Tellchengröße von etwa 0,075 Mikron | 35% | 35% |
| gemahlenes Calciumcarbonat behandelt mit Stearat und mit einer Tellchengröße von etwa 3 Mikron | 5% | 5% |
| Verbindung B1) | 1% | 1% |
| Methyltrlmethoxysllan | 2,5% | 2,5% |
| Reaktionsmischung B2) | 0,5% | 0,5% |

Bei einer einkomponentigen Siliconformulierung sind alle Bestandteile in einer Komponente als Mischung enthalten. Bei einer zweikomponentigen Siliconformulierung liegen zwei gesonderte Komponenten A und B vor, in der jeweils Mischungen von einem Teil der Bestandteile enthalten sind. Solche Kits aus zwei Komponenten sind dem Fachmann bestens vertraut. In einer bevorzugten Ausführungsform befinden sich die Bestandteile a), b) und c) als Mischung in der ersten Komponente A und Bestandteil d) und gegebenenfalls der optionale Bestandteil e) in der zweiten Komponente B. Der oder die optionalen Zusatzstoffe f) sind bevorzugt in Komponente A enthalten, soweit vorstehend nichts anderes angegeben wurde. In der Komponente B können aber z.B. auch gegebenenfalls Zusatzstoffe, Bestandteile f), wie z.B. Verdickungsmittel, die vorstehend beschriebenen Additive oder die endgruppenverschlossenen Siliconöle enthalten sein, um die Viskosität zu steuern.

Weiterhin ist es vorteilhaft, alle genannten, in der zweikomponentigen Siliconformulierung gegebenenfalls vorhandenen Bestandteile so auszuwählen, dass die Lagerstabilität der beiden Komponenten der zweikomponentigen Siliconformulierung durch die Anwesenheit eines solchen Bestandteils nicht negativ beeinflusst wird, d.h., dass sich die Zusammensetzung in ihren Eigenschaften, insbesondere den Applikations- und Aushärtungseigenschaften, bei der Lagerung nicht oder nur wenig verändert. Dies bedingt, dass zur chemischen Aushärtung der beschriebenen zweikomponentigen Siliconzusammensetzung führende Reaktionen während der Lagerung nicht in signifikantem Ausmaß auftreten. In manchen Fällen kann es sinnvoll sein, gewisse Bestandteile vor dem Einmischen in die Zusammensetzung chemisch oder physikalisch zu trocknen.

Typischerweise weist die Komponente A bei erfindungsgemäßen zweikomponentigen Siliconzusammensetzungen eine Viskosität im Bereich von 500 bis 5000 Pa·s, insbesondere 500 bis 3000 Pa·s, auf. Die Komponente B weist typischerweise eine Viskosität im Bereich von 1 bis 1500 Pa·s, insbesondere von 10 bis 700 Pa·s auf. Die Viskosität wird nach der im experimentellen Teil beschriebenen Methode bestimmt.

Sowohl die einkomponentige Siliconformulierung als auch die Komponente A und Komponente B der zweikomponentigen Siliconformulierung werden insbesondere unter Ausschluss von Feuchtigkeit hergestellt und aufbewahrt. Die einkomponentige Formulierung bzw. die beiden Komponenten A und B sind getrennt voneinander lagerstabil, das heisst, sie können in einer geeigneten Verpackung oder Anordnung über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmaß verändern. Üblicherweise wird die Lagerstabilität über die Messung der Viskosität oder der Reaktivität über die Zeit ermittelt.

Die ein- oder zweikomponentige Siliconzusammensetzung eignet sich als Klebstoff, Dichtstoff, Beschichtung oder als Gussmasse. Insbesondere eignet sie sich zum Verkleben, Abdichten oder Beschichten von Substraten. Geeignete Substrate sind z.B. ausgewählt aus der Gruppe bestehend aus Beton, Mörtel, Backstein, Ziegel, Keramik, Gips, Naturstein wie Granit oder Marmor, Glas, Glaskeramik, Metall oder Metalllegierung wie Aluminium, Stahl, Buntmetall, verzinktes Metall, Holz, Kunststoff wie PVC, Polycarbonat, Polymethyl(meth)acrylat, Polyester, Epoxidharz, Farbe und Lack. Metalle oder Metalllegierungen können vorbehandelt sein, z.B. durch anodisieren oder galvanisieren.

Typischerweise eignet sich die erfindungsgemäße Siliconzusammensetzung als Kleb- oder Dichtstoff, insbesondere für Anwendungen, welche eine Zusammensetzung mit einer guten Anfangsfestigkeit und einem geringen Abrutschverhalten erfordern. Insbesondere eignen sich die Siliconformulierungen für den Fenster- oder Fassadenbau, für die Verklebung und Abdichtung von Solarpaneelen und für die Verwendung im Fahrzeugbau. Die erfindungsgemäße ein- oder zweikomponentige Siliconformulierung eignet sich insbesondere als elastischer Klebstoff für das strukturelle Kleben, insbesondere in den Bereichen Fassade, Isolierglas, Fensterbau, Automobil, Solar und Bau.

Dementsprechend betrifft die Erfindung auch ein Verfahren zum Verfüllen eines Raumes zwischen zwei Substraten, um eine Anordnung zu erzeugen, umfassend a) das Bereitstellen einer erfindungsgemäßen ein- oder zweikomponentigen Siliconformulierung, wobei im Fall einer zweikomponentigen Siliconformulierung die beiden Komponenten miteinander vermischt werden, wobei anschließend b1) die einkomponentige Siliconformulierung oder die gemischte zweikomponentige Siliconformulierung auf ein erstes Substrat aufgebracht wird und ein zweites Substrat mit der auf dem ersten Substrat aufgebrachten Siliconformulierung in Kontakt gebracht wird, oder b2) ein durch Anordnen von einem ersten Substrat und einem zweiten Substrat gebildeter Raum mit der einkomponentigen Siliconformulierung oder der gemischten zweikomponentigen Siliconformulierung verfüllt wird. Anschließend wird c) die applizierte oder verfüllt Siliconformulierung ausgehärtet.

Bei Einsatz einer einkomponentigen Siliconformulierung wird die Mischung einfach aus dem Aufbewahrungsbehälter gedrückt oder entnommen, und dann aufgebracht oder verfüllt. Die Aushärtung erfolgt in der Regel durch die Feuchtigkeit in der Umgebung. Die Härtung erfolgt bevorzugt bei Umgebungstemperatur, d.h. ein Erwärmen ist nicht erforderlich.

Bei der Applikation oder Verfüllung der zweikomponentigen Siliconformulierung werden die Komponenten A und B, z.B. durch Rühren, Kneten, Walzen oder dergleichen, insbesondere jedoch über einen Statikmischer, miteinander vermischt. Dabei kommen die Hydroxylgruppen oder die hydrolysierbaren Gruppen des Poly(diorganosiloxans) in Kontakt mit den hydrolysierbaren oder gegebenenfalls mit bereits hydrolysierten Gruppen des Vernetzers, wodurch es zur Aushärtung der Zusammensetzung durch Kondensationsreaktionen kommt, die gegebenenfalls durch den optionalen Kondensationskatalysator unterstützt werden. Der Kontakt der Siliconformulierung mit Wasser, insbesondere in Form von Luftfeuchtigkeit, bei der Applikation oder Verfüllung kann die Vernetzung ebenfalls begünstigen, da durch Reaktion des Wassers mit hydrolysierbaren Gruppen höherreaktive Silanolgruppen gebildet werden. Die Aushärtung der zweikomponentigen Siliconzusammensetzung erfolgt bevorzugt bei Umgebungstemperatur, d.h. ein Erwärmen ist nicht erforderlich.

Bei der Vernetzung der ein- oder zweikomponentigen Siliconzusammensetzung entstehen als Nebenprodukte der Kondensationsreaktion insbesondere Verbindungen, welche weder die Formulierung noch das Substrat, auf dem die Formulierung appliziert oder verfüllt wird, beeinträchtigen. Am meisten bevorzugt handelt es sich bei den Nebenprodukten um Verbindungen, welche sich leicht aus der vernetzenden oder der bereits vernetzten Formulierung verflüchtigen.

Beim erfindungsgemäßen Verfahren erfolgt die Mischung der Komponente A und B bevorzugt so, dass das Gewichtsverhältnis der Komponente A zu Komponente B ≥ 1:1, insbesondere 3:1 bis 15:1 und besonders bevorzugt von 10:1 bis 14:1 beträgt.

Die einkomponentige Siliconformulierung oder, im Falle der zweikomponentigen Siliconformulierung, die Mischung der beiden Komponenten sind vor bzw. beim Aufbringen auf das erste Substrat oder beim Verfüllen des zwischen den beiden Substraten gebildeten Raumes bevorzugt fließfähig und weisen besonders bevorzugt eine Viskosität im Bereich von 500 bis 5000 Pas auf. Die Viskosität kann nach der im experimentellen Teil aufgeführten Methode bestimmt werden. Die einkomponentige Siliconformulierung oder, im Falle der zweikomponentigen Siliconformulierung, die Mischung der beiden Komponenten weisen vor bzw. beim Aufbringen auf das erste Substrat oder vor bzw. beim Verfüllen des zwischen den beiden Substraten gebildeten Raumes ferner bevorzugt eine Nachgebegrenze von weniger als 150 Pa, bevorzugt weniger als 100 Pa und besonders bevorzugt weniger als 80 Pa auf. Das entsprechende Prüfverfahren ist nachstehend im experimentellen Teil beschrieben. Bevorzugt ist eine feuchtigkeitshärtende RTV-Silikonformulierungen, 1K oder 2K, wobei 2K bevorzugt ist.

Die erfindungsgemäßen Siliconformulierungen weisen nach dem Aufbringen bzw. Verfüllen ein hohes Maß an Grünstandfestigkeit auf und sind im gehärteten Zustand außerordentlich witterungsstabil. Der slip down als Maß für die Grünstandfestigkeit liegt bevorzugt im Bereich von 0 bis 2 mm. Der Abfall der Zugfestigkeit nach künstlicher Bewitterung als Maß für die Witterungsstabilität beträgt für die gehärtete Formulierung bevorzugt weniger 25%. Die Prüfverfahren hierfür werden im den experimentellen Teil näher erläutert.

Die Erfindung betrifft auch eine Anordnung, umfassend eine gehärtete Siliconformulierung aus der einkomponentigen Siliconformulierung oder der Mischung der beiden Komponenten der zweikomponentigen Siliconformulierung zwischen zwei Substraten. Diese Anordnung ist insbesondere nach dem erfindungsgemäßen Verfahren erhältlich.

### Beispiele

Im Folgenden werden einige Beispiele aufgeführt, welche die Erfindung weiter veranschaulichen, den Umfang der Erfindung aber in keiner Weise beschränken sollen. Sofern nicht anders angegeben, beziehen sich alle Anteile und Prozentsätze auf das Gewicht.

### Herstellung der Siliconformulierungen

Bei den in Tabelle 1 aufgeführten Siliconformulierungen handelt es sich um 2-komponentige Formulierungen. Alle Mengenangaben beziehen sich auf Gewichtsprozent der Gesamtformulierung (Komponente A + B vermischt im Verhältnis 13:1 Gewicht/Gewicht). Zur Herstellung der Komponente A wurden die angegebene Menge OH-terminiertes Poly(diorganosiloxan), ½ der angegebenen Menge endgruppenverschlossenes Poly(diorganosiloxan) und die angegebene Menge der Füllstoffe in einem Dissolver bei Raumtemperatur unter Inertatmosphäre miteinander vermischt und eingerührt, bis eine makroskopisch homogene Paste erhalten wurde. Zur Herstellung der Komponente B wurden ½ der angegebenen Menge endgruppenverschlossenes Poly(diorganosiloxan), die angegebene Menge funktionelles Trialkoxysilan und die angegebene Menge Sn-Verbindung in einem Dissolver bei Raumtemperatur unter Inertatmosphäre miteinander vermischt und eingerührt, bis eine makroskopisch homogene Paste erhalten wurde. Eine Mischung nur mit feinen Füllstoffen wurde nicht durchgeführt, da solche Mischungen nur schwer verarbeitbar sind.

Die Komponenten A und B wurden direkt nach dem Mischen getrennt in Kartuschen abgefüllt, luftdicht verschlossen gelagert und direkt vor Applikation im GewichtsVerhältnis A:B = 13:1 in einem Dissolver unter Vakuum miteinander vermischt, bis eine makroskopisch homogene Paste erhalten wurde.

### Herstellung der Probekörper und Beschreibung der Prüfmethoden

### Zugfestigkeit nach Lagerung und nach Lagerung unter UV-Behandlung

Die Methode zur Bestimmung der Zugfestigkeit sowie die Herstellung der dazu benötigten Probekörper wird beschrieben in EOTA-ETAG 2 vom Januar 2002. Gemessen wurde an Prüfkörpern für den Zugversuch der Abmessung 12 x 12 x 50 mm unter Verwendung von anodisiertem Aluminium und Floatglas als Substrat. Aluminium wurde mit Sika Aktivator® C-205 und Floatglas mit Sika® Cleaner P (jeweils erhältlich von der Sika Schweiz AG) vorbehandelt. Je drei Probekörper wurden für 1 Tag bei 23°C/50% r.F. gelagert, entformt und für weitere 6 Tage bei 23°C/50% r.F. gelagert und anschließend geprüft, weitere je drei Probekörper wurden zusätzlich nach der beschriebenen Lagerung für 21 Tage in einem Suntester Typ XLS der Firma Atlas bei 55°C im Wasserbad gelagert und mit Licht der Wellenlänge 300-800 nm bei einer Stärke von 550 W/m² bestrahlt. Die Prüfung der Zugfestigkeit wurde in allen Fällen bei 23°C und 50% r.F. durchgeführt.

### Viskosität und Nachgebegrenze

Die Viskosität wurde, wenn nicht anders angegeben, in Anlehnung an DIN 53018 bestimmt. Die Messung der Viskosität erfolgte mittels Kegel-Platte-Viskosimeter Physica MCR101 der Firma Anton Paar, Österreich, Kegel-Typ CP 25-1, Temperatur 23°C. Die angegebenen Viskositätswerte für Poly(diorganosiloxane) und endgruppenverschlossenen Siliconöle beziehen sich dabei auf eine Scherrate von 0,5 s⁻¹. Die angegebenen Werte für die Komponente A, die Komponente B und für die Mischung der Komponenten A und B wurden bei einer Scherrate von 0,89 s⁻¹ ermittelt.

Die in der Tabelle 1 angegebenen Werte für Viskosität und Nachgebegrenze beziehen sich auf die Mischung von A und B. Zur Messung wurden die Proben der jeweiligen Komponenten A und B der zweikomponentigen Siliconformulierung unmittelbar nach Mischung ohne weitere Zusätze oder Verarbeitungsschritte aufgebracht.

Die Nachgebegrenze wurde bestimmt bei 23°C/50% r.F. auf einem Rheometer Typ Physica MCR101 der Firma Anton Paar unter Verwendung eines Kegel-Platte Systems. Dazu wurde ein Oszillationsversuch mit einer konstanten Kreisfrequenz w= 10 s⁻¹ und einer Deformation y = 0,01 bis 100% mit stets 6 Messpunkten pro Dekade durchgeführt. Die Nachgebegrenze erhält man als Schubspannung beim Beginn des Abfalls der Kurve des Speichermoduls.

### Slip-Down

Die Messung des slip down erfolgte bei 23°C/ 50% r.F. Dazu wurden Raupen der Abmessung 70 x 12 x 5 mm (L x B x H) auf einen Steg aus anodisiertem Aluminium aufgetragen. Der Aluminiumsteg wurde senkrecht auf eine Glasplatte aus Floatglas aufgebracht und bis auf 3 mm Abstand angedrückt. Der slip-down wurde nach 24 h als Abrutschen des Aluminiumsteges aus der Anfangsposition bestimmt.

**Tabelle 1**

| | Beispiel 1^{a} | Beispiel 2 | Beispiel 3 | Beispiel 4^{a} | Beispiel 5 | Beispiel 6 | Beispiel 7^{a} |
|---|---|---|---|---|---|---|---|
| OH-terminiertes Poly(dimethylsiloxan)* | 36,8 | 39,36 | 48,4 | 51,6 | 48,2 | 50,1 | 28,1 |
| Trimethylsilyl-terminiertes Poly(dimethylsiloxan)** | 9,4 | 11,3 | 3,8 | 3,9 | 3,6 | 3,8 | 11,0 |
| Octyltrimethoxysilan | 4,0 | 1,9 | 3,5 | 3,0 | 3,4 | 3,5 | 2,8 |
| Bis-(triethoxysilyl)ethan | | 1,8 | 0,9 | 1,4 | 0,9 | 0,9 | |
| EO-PO-EO-Triblockcopolymer*** | | | | | | | 1,4 |
| EO-PO-funktionalisiertes Ethylendiamin**** | 1,4 | 1,4 | 0,4 | 1,4 | 0,6 | 0,4 | 3,6 |
| Russ (D50: 56nm, BET: 45m²/g) | 1,1 | 0,6 | 1,7 | 1,7 | 1,8 | 1,7 | |
| Pyrogene Silica (D50: 10nm, BET: 100 m²/g) | 0,8 | 0,9 | 7,2 | 5,0 | 6,6 | 6,3 | |
| Gefällte Kreide (D50: 80nm, BET: 17m²/g) | 18 | 34,9 | 25,4 | 18,2 | 28,5 | 28,8 | |
| Al(OH)₃ (D50: 1,3µm, BET: 3.5m²/g) | | | 4,3 | 6,8 | 4,3 | 4,4 | |
| Natürliche Kreide (D50: 6µm) | 28,0 | 7,8 | 4,4 | 6,8 | 2,2 | | 53,1 |
| Dioctyl-Sn-diketanoat (21w% Sn) | 0,56 | 0,04 | 0,10 | 0,09 | 0,06 | 0,06 | 0,03 |
| | | | | | | | |
| Verhältnis feine : grobe Füllstoffe | 1:1,4 | 4,7:1 | 4:1 | 1,8:1 | 5,7:1 | 8,4:1 | |
| | | | | | | | |
| Slip down [mm] | 3 | 0 | 0 | 4 | 0,3 | 0 | f.h. |
| Nachgebegrenze [Pa] | 74 | 72 | 38 | n.b. | n.b. | n.b. | 83 |
| Viskosität [Pa*s] | 1'100 | 1'200 | 2'100 | 1700 | 2'500 | 2'400 | 1'550 |
| Zugfestigkeit (7d 23/50) [MPa] | 1,1 | 1,04 | 1,1 | 1,00 | 1,18 | 1,01 | 0,4 |
| Zugfestigkeit (21d 55°C Wasserbad, hv) [MPa] | 0,6 | 1,1 | 1,08 | 0,74 | 1,17 | 1,02 | 0,2 |
| Änderung Zugfestigkeit | -45% | + 6% | + 2% | -26% | -1% | +1% | -50% |

| | | | | | | | |
|---|---|---|---|---|---|---|---|
| ^{a} Beispiel nicht gemäß der Erfindung Rezepturbestandteile sind % w/w und bezogen auf die Gesamtformulierung (A + B gemischt). f.h.: fällt herunter; n.b.: nicht bestimmt *Viskosität 20000 mPas **Viskosität 100 mPas ***Viskosität 200 mPas (50°C, nach ISO 53015), Fließpunkt 14°C (nach ISO 3016) **** Viskosität 500 mPas (20°C, nach ISO 53015), Trübungspunkt 73-79°C (nach DIN 23015) | | | | | | | |

## Patentansprüche

1. Ein- oder zweikomponentige Siliconformulierung, umfassend
a) mindestens ein Poly(diorganosiloxan), das ein oder mehrere Polydiorganosiloxane der Formel (I) ist 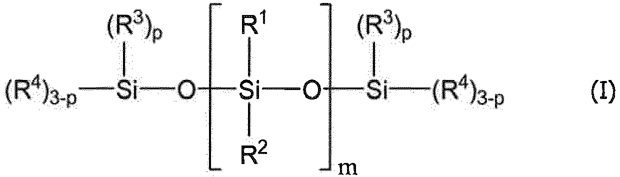 wobei
die Reste R¹, R² und R³ unabhängig voneinander für lineare oder verzweigte, einwertige Kohlenwasserstoffreste mit 1 bis 12 C-Atomen stehen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile bzw. Reste aufweisen; die Reste R⁴ unabhängig voneinander für Wasserstoff, Hydroxylgruppen oder für Alkoxy-, Acetoxy- oder Ketoximgruppen mit jeweils 1 bis 13 C-Atomen stehen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile bzw. Reste aufweisen, wobei die Reste R⁴ bevorzugt für Hydroxylgruppen oder für Alkoxygruppen stehen; der Index p für einen Wert von 0, 1 oder 2 steht; und der Index m so gewählt ist, dass das Poly(diorganosiloxan) bei einer Temperatur von 23 °C eine Viskosität von 10 bis 500000 mPa·s aufweist,
b) mindestens einen ersten Füllstoff mit einer mittleren Teilchengröße D50 kleiner gleich 0,1 µm,
c) mindestens einen zweiten Füllstoff mit einer mittleren Teilchengröße D50 im Bereich von größer als 0,1 µm bis 10 µm und
d) mindestens einen Vernetzer für das Poly(diorganosiloxan),
wobei die Bestandteile bei der einkomponentigen Siliconformulierung in einer Komponente und bei der zweikomponentigen Siliconformulierung aufgeteilt in zwei Komponenten A und B enthalten sind, und
wobei das Gewichtverhältnis von erstem Füllstoff zu zweitem Füllstoff im Bereich von 10:1 bis 2:1 liegt.

2. Ein- oder zweikomponentige Siliconformulierung nach Anspruch 1, **dadurch gekennzeichnet, dass** das Gewichtverhältnis von erstem Füllstoff zu zweitem Füllstoff im Bereich von 9:1 bis 3:1 und bevorzugt im Bereich von 8:1 bis 4:1 liegt.

3. Ein- oder zweikomponentige Siliconformulierung nach Anspruch 1 oder Anspruch 2, **dadurch gekennzeichnet, dass** das mindestens eine Poly(diorganosiloxan) mindestens ein OH-terminiertes Poly(diorganosiloxan) und/oder mindestens ein Alkoxysilylterminiertes Poly(diorganosiloxan) umfasst oder ist.

4. Ein- oder zweikomponentige Siliconformulierung nach einem der Ansprüche 1 bis 3, **dadurch gekennzeichnet, dass** das mindestens eine Poly(diorganosiloxan) eine Viskosität im Bereich von 10 bis 500000 mPas, vorzugsweise im Bereich von 5000 bis 350000mPas, bei 23°C aufweist.

5. Ein- oder zweikomponentige Siliconformulierung nach einem der Ansprüche 1 bis 4, **dadurch gekennzeichnet, dass** der mindestens eine Vernetzer ausgewählt ist aus der Gruppe bestehend aus Tetraalkoxysilan, Organotrialkoxysilan, Diorganodialkoxysilan und Oligo(organoalkoxysilan), Tetrakisketoximosilan, Organotrisketoximosilan, Diorganobisketoximosilan und Oligo(organoketoximosilan) oder Mischungen davon.

6. Ein- oder zweikomponentige Siliconformulierung nach einem der Ansprüche 1 bis 5, ferner umfassend
e) mindestens einen Kondensationskatalysator.

7. Ein- oder zweikomponentige Siliconformulierung nach einem der Ansprüche 1 bis 6, ferner umfassend
f) mindestens einen Zusatzstoff ausgewählt aus der Gruppe bestehend aus Weichmachern, Rheologiehilfsmitteln, Verdickungsmitteln, Haftvermittlern, Katalysatoren, Beschleunigern, Trocknungsmitteln, Duftstoffen, Pigmenten, Bioziden, Stabilisatoren und Tensiden.

8. Ein- oder zweikomponentige Siliconformulierung nach einem der Ansprüche 1 bis 7, **dadurch gekennzeichnet, dass** es sich um eine zweikomponentige Siliconformulierung handelt, wobei die Bestandteile a), b) und c) sowie gegebenenfalls der oder die optionalen Zusatzstoffe f) in der ersten Komponente A und Bestandteil d) und gegebenenfalls der optionale Bestandteil e) in der zweiten Komponente B enthalten sind.

9. Ein- oder zweikomponentige Siliconformulierung nach einem der Ansprüche 1 bis 8, **dadurch gekennzeichnet, dass** die Formulierung ferner einen Zusatzstoff ausgewählt aus endgruppenverschlossenem Siliconöl, aminofunktionalisiertem Organotrialkoxysilan, epoxyfunktionalisiertem Organotrialkoxysilan, mercaptofunktionalisiertem Organotrialkoxysilan, aminofunktionalisiertem Oligosiloxan, Polyamin, Polyether, Heteropolyether und/oder Polyetheramin umfasst.

10. Ein- oder zweikomponentige Siliconformulierung nach einem der Ansprüche 1 bis 9, **dadurch gekennzeichnet, dass** es sich um eine RTV-Siliconformulierung handelt.

11. Ein- oder zweikomponentige Siliconformulierung nach einem der Ansprüche 1 bis 10, **dadurch gekennzeichnet, dass** es sich um eine feuchtigkeitshärtende und/oder fließfähige Siliconformulierung handelt.

12. Ein- oder zweikomponentige Siliconformulierung nach einem der Ansprüche 1 bis 11, **dadurch gekennzeichnet, dass** für den ersten Füllstoff mehrere Füllstoffe verwendet werden.

13. Ein- oder zweikomponentige Siliconformulierung nach einem der Ansprüche 1 bis 12, **dadurch gekennzeichnet, dass** für den ersten Füllstoff ein oder mehrere Füllstoffe verwendet werden, die eine mittlere Teilchengröße D50 der Primärpartikel von 5 bis 100 nm aufweisen, und/oder für den zweiten Füllstoff ein oder mehrere Füllstoffe verwendet werden, die eine mittlere Teilchengröße D50 der Primärpartikel von 0,5 µm bis 10 µm, bevorzugt von 1 µm bis 8 µm aufweisen.

14. Verwendung einer ein- oder zweikomponentigen Siliconformulierung nach einem der Ansprüche 1 bis 13 als elastischer Klebstoff für das strukturelle Kleben, insbesondere in den Bereichen Fassade, Isolierglas, Fensterbau, Automobil, Solar und Bau.

15. Verfahren zum Verfüllen eines Raumes zwischen zwei Substraten, um eine Anordnung zu erzeugen, umfassend
a) das Bereitstellen einer Siliconformulierung nach einem der Ansprüche 1 bis 13, wobei im Fall einer zweikomponentigen Siliconformulierung die beiden Komponenten miteinander vermischt werden,
b1) das Aufbringen der einkomponentigen Siliconformulierung oder der gemischten zweikomponentigen Siliconformulierung auf ein erstes Substrat und das Inkontaktbringen eines zweiten Substrats mit der auf dem ersten Substrat aufgebrachten Siliconformulierung oder
b2) das Verfüllen eines durch Anordnen von einem ersten Substrat und einem zweiten Substrat gebildeten Raumes mit der einkomponentigen Siliconformulierung oder der gemischten zweikomponentigen Siliconformulierung und
c) das Aushärten der Siliconformulierung.

16. Verfahren nach Anspruch 15, **dadurch gekennzeichnet, dass** die Siliconformulierung oder, im Falle der zweikomponentigen Siliconformulierung, die Mischung der beiden Komponenten beim Aufbringen auf das erste Substrat oder beim Verfüllen des zwischen den beiden Substraten gebildeten Raumes eine Viskosität im Bereich von 500 bis 5000 Pas bei 23°C aufweist.

17. Verfahren nach Anspruch 15 oder Anspruch 16, **dadurch gekennzeichnet, dass** die Siliconformulierung oder, im Falle der zweikomponentigen Siliconformulierung, die Mischung der beiden Komponenten beim Aufbringen auf das erste Substrat oder beim Verfüllen des zwischen den beiden Substraten gebildeten Raumes eine Nachgebegrenze von weniger als 150 Pa aufweist.

18. Verfahren nach einem der Ansprüche 15 bis 17, **dadurch gekennzeichnet, dass** die Siliconformulierung eine zweikomponentige Siliconformulierung ist.

19. Anordnung, umfassend eine gehärtete Siliconformulierung, die einen Raum zwischen zwei Substraten ausfüllt, erhältlich nach einem Verfahren der Ansprüche 15 bis 18.

## Claims

1. One- or two-component silicone formulation, comprising:
a) at least one poly(diorganosiloxane) which is one or more polydiorganosiloxanes with the formula (I), 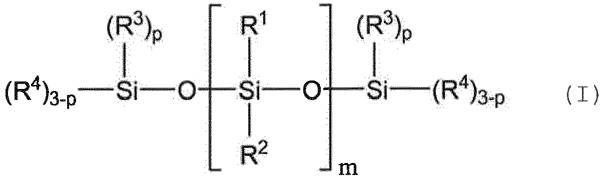 where
the groups R¹, R² and R³ independently of one another represent linear or branched monovalent hydrocarbon groups having 1 to 12 carbon atoms, which optionally include one or more heteroatoms, and optionally one or more carbon-carbon multiple bonds and/or optionally cycloaliphatic and/or aromatic fractions or groups; the groups R⁴ independently of one another represent hydrogen, hydroxyl groups, or alkoxy, acetoxy or ketoxime groups, each having 1 to 13 carbon atoms, which optionally include one or more heteroatoms, and optionally one or more carbon-carbon multiple bonds and/or optionally cycloaliphatic and/or aromatic fractions or groups, wherein the groups R⁴ preferably represent hydroxyl groups or alkoxy groups; the subscript p represents a value of 0, 1 or 2; and the subscript m is selected so that the poly(diorganosiloxane) has a viscosity of 10 to 500,000 mPa·s at a temperature of 23°C,
b) at least one first filler having an average particle size D50 of smaller than or equal to 0.1 µm,
c) at least one second filler having an average particle size D50 in the range of larger than 0.1 µm to 10 µm, and
d) at least one cross-linking agent for the poly(diorganosiloxane),
wherein the constituents are present in one component in the case of the one-component silicone formulation, and are present divided into two components A and B in the case of the two-component silicone formulation, and
wherein the weight ratio of the first filler to the second filler is in the range of 10:1 to 2:1.

2. One- or two-component silicone formulation according to claim 1, **characterized in that** the weight ratio of the first filler to the second filler is in the range of 9:1 to 3:1, and preferably in the range of 8:1 to 4:1.

3. One- or two-component silicone formulation according to claim 1 or claim 2, **characterized in that** the at least one poly(diorganosiloxane) comprises or is at least one OH-terminated poly(diorganosiloxane) and/or at least one alkoxysilyl-terminated poly(diorganosiloxane).

4. One- or two-component silicone formulation according to any one of claims 1 to 3, **characterized in that** the at least one poly(diorganosiloxane) has a viscosity in the range of 10 to 500,000 mPas, preferably in the range of 5,000 to 350,000 mPas, at 23°C.

5. One- or two-component silicone formulation according to any one of claims 1 to 4, **characterized in that** the at least one cross-linking agent is selected from the group consisting of tetraalkoxysilane, organotrialkoxysilane, diorganodialkoxysilane and oligo(organoalkoxysilane), tetrakis ketoximosilane, organotris ketoximosilane, diorganobis ketoximosilane and oligo(organoketoximosilane), or mixtures thereof.

6. One- or two-component silicone formulation according to any one of claims 1 to 5, further comprising:
e) at least one condensation catalyst.

7. One- or two-component silicone formulation according to any one of claims 1 to 6, further comprising:
f) at least one additive, selected from the group consisting of plasticizers, rheology auxiliaries, thickeners, adhesive promoters, catalysts, accelerators, drying agents, odorants, pigments, biocides, stabilizers and surfactants.

8. One- or two-component silicone formulation according to any one of claims 1 to 7, **characterized in that** the formulation is a two-component silicone formulation, wherein the constituents a), b) and c) and, if necessary, the optional additive or additives f), are present in the first component A, and constituent d) and, if necessary, the optional constituent e) are present in the second component B.

9. One- or two-component silicone formulation according to any one of claims 1 to 8, **characterized in that** the formulation furthermore comprises an additive selected from end-capped silicone oil, amino-functionalized organotrialkoxysilane, epoxy-functionalized organotrialkoxysilane, mercapto-functionalized organotrialkoxysilane, amino-functionalized oligosiloxane, polyamine, polyether, heteropolyether and/or polyetheramine.

10. One- or two-component silicone formulation according to any one of claims 1 to 9, **characterized in that** the formulation is an RTV silicone formulation.

11. One- or two-component silicone formulation according to any one of claims 1 to 10, **characterized in that** the formulation is a moisture-curing and/or free-flowing silicone formulation.

12. One- or two-component silicone formulation according to any one of claims 1 to 11, **characterized in that** a plurality of fillers are used for the first filler.

13. One- or two-component silicone formulation according to any one of claims 1 to 12, **characterized in that** one or more fillers in which the average particle size D50 of the primary particles is 5 to 100 nm are used for the first filler, and/or that one or more fillers in which the average particle size D50 of the primary particles is 0.5 µm to 10 µm, and preferably 1 µm to 8 µm, are used for the second filler.

14. Use of a one- or two-component silicone formulation according to any one of claims 1 to 13 as an elastic adhesive for structural adhesive attachment, in particular in the facade, insulated glass, window construction, automotive, solar and construction fields.

15. Method for filling a space between two substrates so as to create an arrangement, comprising:
a) providing a silicone formulation according to any one of claims 1 to 13, wherein the two components are mixed with each other in the case of a two-component silicone formulation,
b1) applying the one-component silicone formulation, or the mixed two-component silicone formulation, to a first substrate, and bringing a second substrate in contact with the silicone formulation that has been applied to the first substrate, or
b2) filling a space formed by the arrangement of a first substrate and a second substrate with the one-component silicone formulation, or with the mixed two-component silicone formulation, and
c) curing the silicone formulation.

16. Method according to claim 15, **characterized in that** the silicone formulation or, in the case of the two-component silicone formulation, the mixture of the two components has a viscosity in the range of 500 to 5,000 Pas at 23°C when it is applied to the first substrate or filled into the space formed between the two substrates.

17. Method according to claim 15 or claim 16, **characterized in that** the silicone formulation or, in the case of the two-component silicone formulation, the mixture of the two components has a yield point of less than 150 Pa when it is applied to the first substrate or filled into the space formed between the two substrates.

18. Method according to any one of claims 15 to 17, **characterized in that** the silicone formulation is a two-component silicone formulation.

19. Arrangement, comprising a cured silicone formulation, which fills a space between two substrates, obtainable according to a method according to claims 15 to 18.

## Revendications

1. Formulation de silicone à un ou deux composants, comprenant :
a) au moins un poly(diorganosiloxane) qui est un ou plusieurs polydiorganosiloxanes de formule (I) 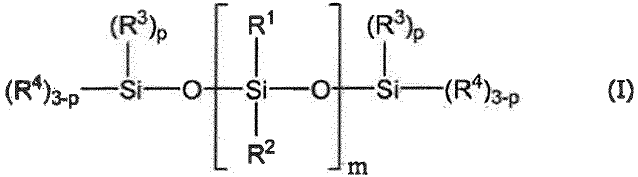 dans laquelle
les radicaux R¹, R² et R³ représentent indépendamment les uns des autres des radicaux hydrocarbonés monovalents, linéaires ou ramifiés, comprenant de 1 à 12 atomes C, qui comprennent éventuellement un ou plusieurs hétéroatomes, et éventuellement une ou plusieurs liaisons C-C multiples et/ou éventuellement des fractions ou radicaux cycloaliphatiques et/ou aromatiques ; les radicaux R⁴ représentent indépendamment les uns des autres l'hydrogène, des groupes hydroxyle ou des groupes alcoxy, acétoxy ou cétoxime, comprenant chacun de 1 à 13 atomes C, qui comprennent éventuellement un ou plusieurs hétéroatomes, et éventuellement une ou plusieurs liaisons C-C multiples et/ou éventuellement des fractions ou radicaux cycloaliphatiques et/ou aromatiques, les radicaux R⁴ représentant de préférence des groupes hydroxyle ou des groupes alcoxy ; l'indice p représente une valeur de 0, 1 ou 2 ; et l'indice m est choisi de sorte que le poly(diorganosiloxane) présente à une température de 23 °C une viscosité de 10 à 500 000 mPa·s,
b) au moins une première charge ayant une taille de particule moyenne D50 inférieure égale à 0,1 µm,
c) au moins une deuxième charge ayant une taille de particule moyenne D50 dans la plage allant de plus de 0,1 µm à 10 µm, et
d) au moins un agent de réticulation pour le poly(diorganosiloxane),
les constituants étant contenus pour une formulation de silicone à un composant dans un composant et pour une formulation de silicone à deux composants divisés en deux composants A et B, et
le rapport en poids entre la première charge et la deuxième charge se situant dans la plage allant de 10:1 à 2:1.

2. Formulation de silicone à un ou deux composants selon la revendication 1, **caractérisée en ce que** le rapport en poids entre la première charge et la deuxième charge se situe dans la plage allant de 9:1 à 3:1 et de préférence dans la plage allant de 8:1 à 4:1.

3. Formulation de silicone à un ou deux composants selon la revendication 1 ou la revendication 2, **caractérisée en ce que** l'au moins un poly(diorganosiloxane) comprend ou est au moins un poly(diorganosiloxane) à terminaison OH et/ou au moins un poly(diorganosiloxane) à terminaison alcoxysilyle.

4. Formulation de silicone à un ou deux composants selon l'une quelconque des revendications 1 à 3, **caractérisée en ce que** l'au moins un poly(diorganosiloxane) présente une viscosité dans la plage allant de 10 à 500 000 mPas, de préférence dans la plage allant de 5 000 à 350 000 mPas, à 23 °C.

5. Formulation de silicone à un ou deux composants selon l'une quelconque des revendications 1 à 4, **caractérisée en ce que** l'au moins un agent de réticulation est choisi dans le groupe constitué par le tétraalcoxysilane, l'organotrialcoxysilane, le diorganodialcoxysilane et l'oligo(organoalcoxysilane), le tétrakiscétoximosilane, l'organotriscétoximosilane, le diorganobiscétoximosilane et l'oligo(organocétoximosilane) ou leurs mélanges.

6. Formulation de silicone à un ou deux composants selon l'une quelconque des revendications 1 à 5, comprenant en outre :
e) au moins un catalyseur de condensation.

7. Formulation de silicone à un ou deux composants selon l'une quelconque des revendications 1 à 6, comprenant en outre :
f) au moins un additif choisi dans le groupe constitué par les plastifiants, les adjuvants de rhéologie, les épaississants, les promoteurs d'adhésion, les catalyseurs, les accélérateurs, les agents siccatifs, les parfums, les pigments, les biocides, les stabilisateurs et les tensioactifs.

8. Formulation de silicone à un ou deux composants selon l'une quelconque des revendications 1 à 7, **caractérisée en ce qu'**il s'agit d'une formulation de silicone à deux composants, les constituants a), b) et c), ainsi qu'éventuellement le ou les additifs f) optionnels, étant contenus dans le premier composant A et le constituant d) et éventuellement le constituant e) optionnel étant contenus dans le deuxième composant B.

9. Formulation de silicone à un ou deux composants selon l'une quelconque des revendications 1 à 8, **caractérisée en ce que** la formulation comprend en outre un additif choisi parmi une huile de silicone fermée par des groupes terminaux, un organotrialcoxysilane à fonctionnalisation amino, un organotrialcoxysilane à fonctionnalisation époxy, un organotrialcoxysilane à fonctionnalisation mercapto, un oligosiloxane à fonctionnalisation amino, une polyamine, un polyéther, un hétéropolyéther et/ou une polyéther-amine.

10. Formulation de silicone à un ou deux composants selon l'une quelconque des revendications 1 à 9, **caractérisée en ce qu'**il s'agit d'une formulation de silicone RTV.

11. Formulation de silicone à un ou deux composants selon l'une quelconque des revendications 1 à 10, **caractérisée en ce qu'**il s'agit d'une formulation de silicone durcissant à l'humidité et/ou fluide.

12. Formulation de silicone à un ou deux composants selon l'une quelconque des revendications 1 à 11, **caractérisée en ce que** plusieurs charges sont utilisées pour la première charge.

13. Formulation de silicone à un ou deux composants selon l'une quelconque des revendications 1 à 12, **caractérisée en ce qu'**une ou plusieurs charges qui présentent une taille de particule moyenne D50 des particules primaires de 5 à 100 nm sont utilisées pour la première charge et/ou une ou plusieurs charges qui présentent une taille de particule moyenne D50 des particules primaires de 0,5 µm à 10 µm, de préférence de 1 µm à 8 µm, sont utilisées pour la deuxième charge.

14. Utilisation d'une formulation de silicone à un ou deux composants selon l'une quelconque des revendications 1 à 13 en tant qu'adhésif élastique pour le collage structural, notamment dans le domaine des façades, du verre isolant, de la construction de fenêtres, automobile, solaire et du bâtiment.

15. Procédé de remplissage d'un espace entre deux substrats, afin de générer un agencement, comprenant :
a) la préparation d'une formulation de silicone selon l'une quelconque des revendications 1 à 13, dans le cas d'une formulation de silicone à deux composants, les deux composants étant mélangés l'un avec l'autre,
b1) l'application de la formulation de silicone à un composant ou de la formulation de silicone à deux composants mélangée sur un premier substrat et la mise en contact d'un deuxième substrat avec la formulation de silicone appliquée sur le premier substrat, ou
b2) le remplissage d'un espace formé par agencement d'un premier substrat et d'un deuxième substrat avec la formulation de silicone à un composant ou la formulation de silicone à deux composants mélangée, et
c) le durcissement de la formulation de silicone.

16. Procédé selon la revendication 15, **caractérisé en ce que** la formulation de silicone ou, dans le cas de la formulation de silicone à deux composants, le mélange des deux composants présente lors de l'application sur le premier substrat ou lors du remplissage de l'espace formé entre les deux substrats une viscosité dans la plage allant de 500 à 5 000 Pas à 23 °C.

17. Procédé selon la revendication 15 ou la revendication 16, **caractérisé en ce que** la formulation de silicone ou, dans le cas de la formulation de silicone à deux composants, le mélange des deux composants présente lors de l'application sur le premier substrat ou lors du remplissage de l'espace formé entre les deux substrats une limite de fluage de moins de 150 Pa.

18. Procédé selon l'une quelconque des revendications 15 à 17, **caractérisé en ce que** la formulation de silicone est une formulation de silicone à deux composants.

19. Agencement, comprenant une formulation de silicone durcie, qui remplit un espace entre deux substrats, pouvant être obtenu par un procédé selon les revendications 15 à 18.
